# EUROPEAN PATENT APPLICATION

(11) **EP 4 730 544 A1**
(43) Date of publication of application: **22.04.2026**
(21) Application number: 25200103.7
(22) Date of filing: 04.09.2025
(51) Int. Cl.: H01M 50/503, H01M 50/514, H01M 50/522, H01M 50/581, H01M 50/526

(54) **BATTERY MODULE**

(30) Priority: 16.10.2024 KR 20240141463
(71) Applicant: SAMSUNG SDI CO., LTD., Yongin-si, Gyeonggi-do 17084 (KR)
(72) Inventor: BAE, Jeongguk, 17084 Yongin-si, Gyeonggi-do (KR)
(74) Representative: Gulde & Partner

(57) **Abstract**

A battery module includes a plurality of unit battery cells, and bus bars electrically connecting the plurality of unit battery cells to each other, wherein each of the bus bars includes a pair of magnets, each magnet including an end portion and an opposite end portion at an opposite end relative to the end portion, the end portions of the pair of magnets having different polarities and being in contact with each other, an elastic member connected to each of the opposite end portions of each of the pair of magnets, and a conductive guide unit guiding a movement of each of the pair of magnets.

## Description

### BACKGROUND

### 1. Field

Embodiments of the present disclosure relate to a battery module.

### 2. Description of the Related Art

A secondary battery may be charged and discharged, unlike a primary battery that is not rechargeable. A battery cell of low capacity is used in a small-sized electronic device that is portable such as a smartphone, a feature phone, a laptop computer, a digital camera, and a camcorder, and a battery cell of large capacity is widely used as a power source for driving a motor in a hybrid vehicle, an electric vehicle, *etc.* and as a battery for storing electric power. The battery cell includes an electrode assembly including a positive electrode and a negative electrode, a case accommodating the electrode assembly, and an electrode terminal connected to the electrode assembly.

In one or more embodiments, a battery cell of large capacity may be used in a battery module in which a plurality of battery cells are connected in series and/or in parallel in order to provide high energy density (*e.g*., for driving a motor of a hybrid vehicle).

The above information disclosed in this Background section is intended to enhance understanding of the background of the disclosure and may contain information that does not constitute prior art.

### SUMMARY

Aspects of one or more embodiments of the present disclosure are directed toward a battery module having improved stability by automatically blocking a current path if (*e.g*., when) a temperature of the battery module increases.

However, the technical purpose to be solved by the present disclosure is not limited to the above, and other objects not mentioned herein will be clearly understood by those skilled in the art from the following disclosure.

According to one or more embodiments of the present disclosure, a battery module includes a plurality of unit battery cells, and bus bars electrically connecting the plurality of unit battery cells to each other, wherein each of the bus bars includes a pair of magnets, each magnet including an end portion and an opposite end portion at an opposite end relative to the end portion, the end portions of the pair of magnets having different polarities and begin in contact with each other, an elastic member connected to each of the opposite end portions of the pair of magnets, and a conductive guide unit guiding a movement of each of the pair of magnets.

In one or more embodiments, a metal layer may be coated on a surface of each of the pair of magnets.

In one or more embodiments, the battery module may further include a second magnet adjacent to each of the opposite end portions of the pair of magnets and applying (exerting) a repulsive force to each of the pair of magnets.

In one or more embodiments, the pair of magnets may be separated from each other to block or reduce a current in case that the pair of magnets lose magnetic force at a certain temperature or greater. For example, the pair of magnets may each have a Curie temperature at or above which the pair of magnets are separated from each other to block a current.

In one or more embodiments, in case that the pair of magnets are separated, a separation distance between the pair of magnets may be in a range of 1 mm to 100 mm. For example, at or above the Curie temperatures of the pair of magnets, a separation distance between the pair of magnets may be in a range of 1 mm to 100 mm.

In one or more embodiments, the metal layer may include at least one of nickel, silver, aluminum, copper, or gold.

In one or more embodiments, the metal layer and the conductive guide unit may include the same material.

In one or more embodiments, the metal layer may have a thickness in a range of 0.01 mm to 50 mm.

In one or more embodiments, the battery module may further include a conductive paste layer on contact surfaces between the pair of magnets.

In one or more embodiments, the conductive guide unit may include a first fastening portion on an inner surface of the conductive guide unit, the first fastening portion extending in a lengthwise direction of the conductive guide unit, and each of the pair of magnets may include a second fastening portion on a side surface of each of the pair of magnets, the second fastening portion coupled to the first fastening portion.

According to one or more embodiments of the present disclosure, a battery module includes at least two unit battery cells adjacent to each other, and a bus bar electrically connecting the two adjacent unit battery cells to each other, wherein the bus bar includes a pair of magnets attached to each other due to an attractive force, an elastic member connected to each of the pair of magnets and applying a tensile force to each of the pair of magnets in a direction opposite to the direction of the attractive force, and a metal layer coated on a surface of each of the pair of magnets.

In one or more embodiments, the battery module may further include a second magnet on an outer side of each of the pair of magnets and applying (exerting) a repulsive force to each of the pair of magnets.

In one or more embodiments, in case that the pair of magnets lose magnetic force at a certain temperature or higher, the pair of magnets may be separated from each other to block or reduce a current. For example, the pair of magnets may each have a Curie temperature at or above which the pair of magnets are separated from each other to block a current.

In one or more embodiments, in case that the pair of magnets are separated from each other, a separation distance between the pair of magnets may be in a range of 1 mm to 100 mm. For example, at or above the Curie temperatures of the pair of magnets, a separation distance between the pair of magnets may be in a range of 1 mm to 100 mm.

In one or more embodiments, the metal layer may include at least one of nickel, silver, aluminum, copper, or gold.

Additional aspects will be set forth in part in the description which follows and, in part, will be apparent from the description, or may be learned by practice of the presented embodiments of the disclosure.

### BRIEF DESCRIPTION OF THE DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings in which:
FIG. 1 is a perspective view schematically showing a battery module according to one or more embodiments of the present disclosure;
FIG. 2 is a perspective view schematically showing a battery cell in the battery module of FIG. 1, according to one or more embodiments of the present disclosure;
FIG. 3 is a cross-sectional view taken along the line II-II' of FIG. 2, according to one or more embodiments of the present disclosure;
FIGS. 4 and 5 are bottom views schematically showing a portion EA in FIG. 1, according to one or more embodiments of the present disclosure;
FIGS. 6 and 7 are bottom views schematically showing a portion EA in FIG. 1, according to one or more embodiments of the present disclosure;
FIG. 8 is a bottom view schematically showing a portion EA of FIG. 1, according to one or more embodiments of the present disclosure;
FIG. 9 is a bottom view schematically showing a portion EA of FIG. 1, according to one or more embodiments of the present disclosure; and
FIGS. 10 and 11 are bottom views schematically showing a portion EA of FIG. 1, according to one or more embodiments of the present disclosure.

### DETAILED DESCRIPTION

Hereinafter, one or more embodiments of the present disclosure will be described in detail with reference to accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, it will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, the accompanying drawings are not shown according to the actual scale to help understand the disclosure, but the dimensions of some components may be exaggerated. Furthermore, the same element in different embodiments may be given the same reference numeral.

Expressions including ordinal numbers such as "first" and "second" indicate various elements, but the above expressions do not limit the elements. These terms are used to distinguish one element from another, and unless the context clearly indicates otherwise, a first element may be a second element.

As used herein, the singular forms are intended to include the plural forms as well, unless the context clearly indicates otherwise.

It will be understood that when an element is referred to being "on (or below)" or "above (or under)" another element, it may be positioned in contact with an upper surface (or a lower surface) of the other element, but another element may be positioned between the element and the other element on (or below) the element.

It will be further understood that when an element is referred to as being "connected", "coupled" or "joined" to another element, the elements may be directly connected or joined to each other, but intervening elements may be present between them or each element may be "connected", "coupled" or "joined" to each other through another element. It will be understood that when an element is referred to as being "electrically coupled" to another element, the element can be directly electrically coupled to another element or intervening elements may be present.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the terms "use," "using," and "used" may be considered synonymous with the terms "utilize," "utilizing," and "utilized," respectively.

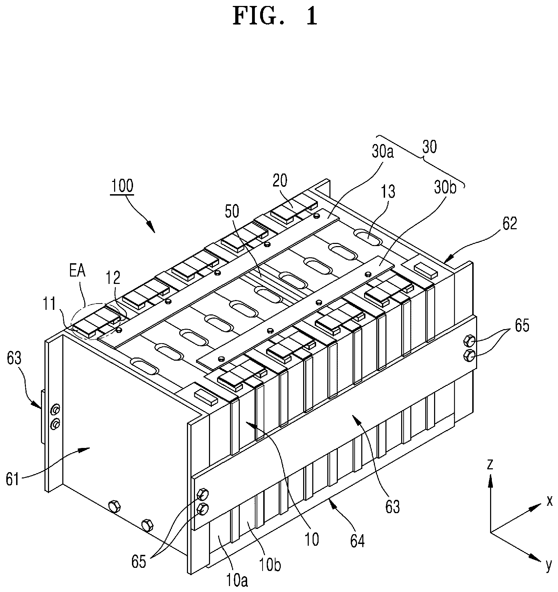

FIG. 1 is a perspective view schematically showing a battery module according to one or more embodiments of the present disclosure.

Referring to FIG. 1, a battery module 100 according to the present disclosure includes a plurality of battery cells 10 provided with terminal portions 11 and 12, where the plurality of battery cells 10 are aligned and arranged in one direction, a connection tab 20 connecting one battery cell 10a to another adjacent battery cell 10b, and a protective circuit module 30 having one end portion connected to the connection tab 20.

The protective circuit module 30 may be a battery management system (BMS). In addition, the connection tab 20 include a body portion that is in contact with the terminal portions 11 and 12 of adjacent battery cells 10a and 10b, and an extension portion extending from the body portion to be connected to the protective circuit module 30. The connection tab 20 may be a bus bar.

First, the battery cell 10 may include a battery case, and an electrode assembly and an electrolyte accommodated in the battery case. The electrode assembly and the electrolyte may electrochemically react and generate energy.

The terminal portions 11 and 12 electrically connected to the connection tab 20 and a vent 13 that is a discharge passage of a gas generated in the battery cell may be provided at one side of the battery cell 10. The terminal portions 11 and 12 of the battery cell 10 may include a positive electrode terminal 11 and a negative electrode terminal 12 having different polarities from each other, and the terminal portions 11 and 12 of neighboring battery cells 10a and 10b may be electrically connected to each other in series or in parallel via the connection tab 20 that is described later. In addition, the serial connection is described as an example in the above description, but the present disclosure is not limited thereto and may adopt various connection structures as necessary. Also, the number and arrangement of the battery cells are not limited to the structure shown in FIG. 1, but may be changed as necessary.

The plurality of battery cells 10 may be arranged in one direction so that larger surfaces of the battery cells 10 face each other, and the plurality of battery cells 10 arranged as above may be fixed by the housing 61, 62, 63, and 64.

The housing 61, 62, 63, and 64 may include a pair of end plates 61 and 62 facing the larger surfaces of the battery cells 10, and side plates 63 and a bottom plate 64 connecting the pair of end plates 61 and 62 to each other.

The side plates 63 support side surfaces of the battery cells 10, and the bottom plate 64 may support bottom surfaces of the battery cells 10. Also, the pair of end plates 61 and 62, the side plates 63, and the bottom plate 64 may be connected via members such as bolts 65, etc.

The protective circuit module 30 has electronic components, protective circuits, etc. that are mounted and may be electrically connected to the connection tab 20 that is described later.

The protective circuit module 30 may include a first protective circuit module 30a and a second protective circuit module 30b that extend on different positions along a direction in which the plurality of battery cells 10 are arranged, and the first and second protective modules 30a and 30b may be spaced apart a certain distance from each other to be in parallel with each other and may be electrically connected to the adjacent connection tabs 20.

For example, the first protective circuit module 30a may extend on a side of the upper portions of the plurality of battery cells 10 in the direction in which the plurality of battery cells 10 are arranged, and the second protective circuit module 30b may extend on the other side of the upper portions of the plurality of battery cells 10 in the direction in which the plurality of battery cells 10 are arranged. In addition, the second protective circuit module 30b may be spaced apart a certain distance from the first protective circuit module 30a with the vent 13 interposed between the first and second protective circuit modules 30a and 30b, and may be arranged parallel to the first protective circuit module 30a.

As described above, two protective circuit modules may be arranged to be spaced apart from each other in parallel in the direction in which the plurality of battery cells are arranged, and thus, advantageously an area of a printed circuit board (PCB) included in the protective circuit modules may be minimized. By forming the protective circuit module with two separate protective circuit modules, an unnecessary area of the PCB may be reduced.

In addition, the first protective circuit module 30a and the second protective circuit module 30b may be connected to each other via a conductive connection member 50. Here, one side of the connection member 50 may be connected to the first protective circuit module 30a and the other side of the connection member 50 may be connected to the second protective circuit module 30b, and thus, two protective circuit modules may be electrically connected to each other.

The above connection may be implemented via any one of soldering, a resistive welding, a laser welding, or a projection welding method.

In addition, the connection member 50 may be, for example, an electric wire. Also, the connection member 50 may have a material that is elastic or flexible. It may be identified and managed whether voltages, temperatures, and currents of the plurality of battery cells 10 are normal by means of the connection member 50.

That is, information such as voltage, current, temperature, etc. transferred to the first protective circuit module 30a from the connection tabs adjacent to the first protective module 30a and information such as voltage, current, and temperature transferred to the second protective circuit module 30b from the connection tabs adjacent to the second protective circuit module 30b may be integrally managed by the protective circuit module via the connection member 50.

Also, when the battery cell 10 swells, the impact may be absorbed by the elasticity or flexibility of the connection member 50 and damage to the first and second protective circuit modules 30a and 30b may be prevented.

Also, the shape and structure of the connection member 50 are not limited to the example of FIG. 1.

As described above, because the protective circuit module 30 may include the first and second protective circuit modules 30a and 30b, the area of the PCB included in the protective circuit module may be reduced and an internal space in the battery module may be secured. Thus, this may facilitate the repairing when an abnormality is sensed from the battery module, as well as the fastening work for connecting the connection tab 20 and the protective circuit module 30, thereby advantageously improving the operating efficiency.

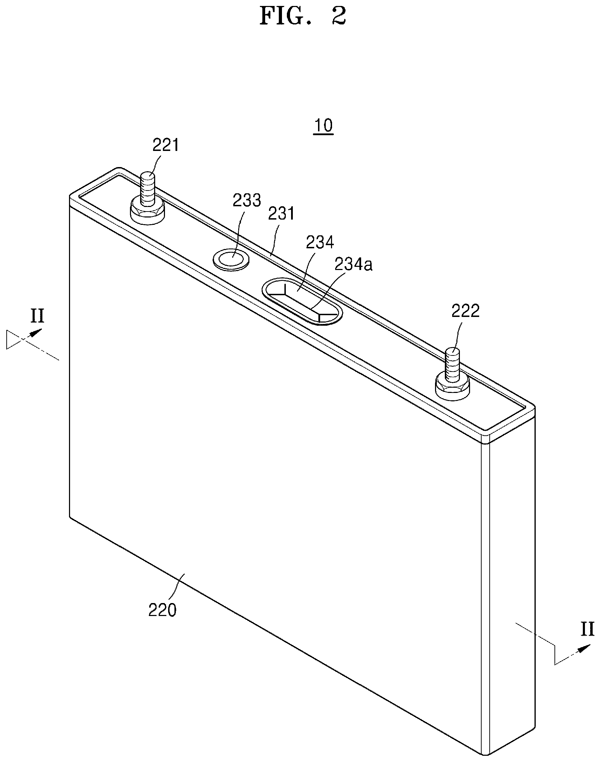

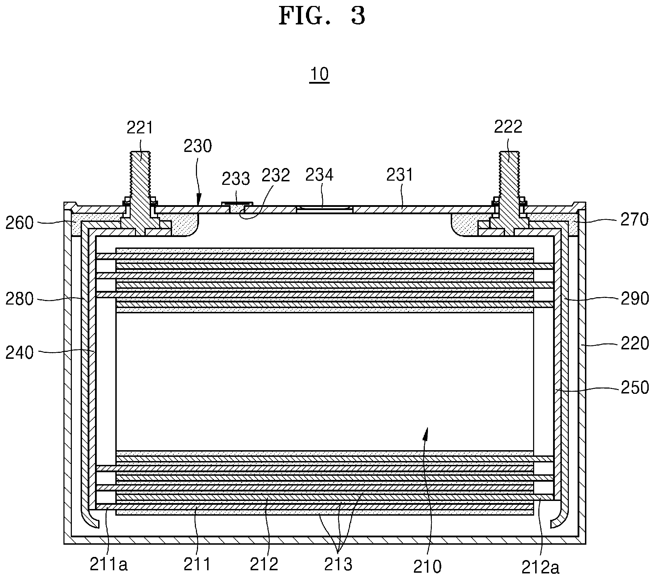

FIG. 2 is a perspective view schematically showing the battery cell in the battery module of FIG. 1, according to one or more embodiments of the present disclosure, and FIG. 3 is a cross-sectional view schematically showing a cross-section taken along the line II-II of FIG. 2, according to one or more embodiments of the present disclosure.

Referring to FIGS. 2 and 3, the battery cell 10 according to one or more embodiments may include at least one electrode assembly 210 formed by winding a positive electrode 211 and a negative electrode 212 with a separator 213 that is an insulator interposed between the positive and negative electrodes, a case 220 in which the electrode assembly 210 is housed, and a cap assembly 230 coupled to an opening of the case 220.

An example in which the battery cell 10 according to the embodiment is a lithium-ion battery cell and is angular type is described below. However, the present disclosure is not limited thereto, and the present disclosure may be applied to various types of battery cells such as a lithium polymer battery cell, a cylindrical battery cell, etc.

The positive electrode 211 and the negative electrode 212 may each include a coating portion that is a region applied with an active material on a current collector that includes a thin metal foil, and an active material-non-coated portion 211a or 212a that is a region not coated with the active material.

The positive electrode 211 and the negative electrode 212 are wound with the separator 213 that is an insulator interposed between the positive and negative electrodes. However, the present disclosure is not limited thereto, and the electrode assembly 210 may have a structure in which a positive electrode and a negative electrode including a plurality of sheets are alternately stacked with a separator interposed between the positive and negative electrodes.

The case 220 forms the overall exterior of the battery cell 10 and may include a conductive metal such as aluminum, an aluminum alloy, or steel plated with nickel. Also, the case 220 may provide a space in which the electrode assembly 210 is accommodated.

The cap assembly 230 may include a cap plate 231 covering an opening in the case 220, and the case 220 and the cap plate 231 may include a conductive material. Here, a positive electrode terminal 221 and a negative electrode terminal 222 electrically connected to the positive electrode 211 or the negative electrode 212 may be installed to protrude outward after passing through the cap plate 231.

Also, outer circumferences of upper pillars of the positive and negative electrode terminals 221 and 222 protruding out of the cap plate 231 may be threaded and fixed to the cap plate 231 via a nut.

However, the present disclosure is not limited thereto, and the positive and negative electrode terminals 221 and 222 may be formed in rivet structures to be riveted or may be welded to the cap plate 231.

Also, the cap plate 231 may include a thin plate and may be coupled to the opening of the case 220, and the cap plate 231 may have an electrolyte injection port 232 in which a sealing cap 233 may be installed and a vent 234 having a notch.

The positive and negative electrode terminals 221 and 222 may be electrically connected to a current collector including first and second current collectors 240 and 250 (hereinafter, referred to as positive electrode and negative electrode current collectors) bonded to a positive electrode active material-non-coated portion 211a or a negative electrode active material-non-coated portion 212a via welding.

For example, the positive electrode and negative electrode terminals 221 and 222 may be coupled to the positive electrode and negative electrode current collectors 240 and 250 via welding. However, the present disclosure is not limited thereto, and the positive electrode and negative electrode terminals 221 and 222 and the positive electrode and negative electrode current collectors 240 and 250 may be integrally formed with each other.

Also, an insulating member may be installed between the electrode assembly 210 and the cap plate 231. Here, the insulating member may include first and second lower insulating members 260 and 270 which may be each installed between the electrode assembly 210 and the cap plate 231.

Also, according to the embodiment, an end of a separating member which may be installed to face one side surface of the electrode assembly 210 may be installed between the insulating member and the positive electrode or negative electrode terminal 221 or 222.

Here, the separating member may include first and second separating members 280 and 290.

Therefore, end portions of the first and second separating members 280 and 290 that may be installed to face one surface of the electrode assembly 210 may be installed between the first and second lower insulating members 260 and 270 and the positive electrode and negative electrode terminals 221 and 222.

Consequently, the positive electrode and negative electrode terminals 221 and 222 coupled to the positive electrode and negative electrode current collectors 240 and 250 via welding may be coupled to the first and second lower insulating members 260 and 270 and the end portions of the first and second separating members 280 and 290.

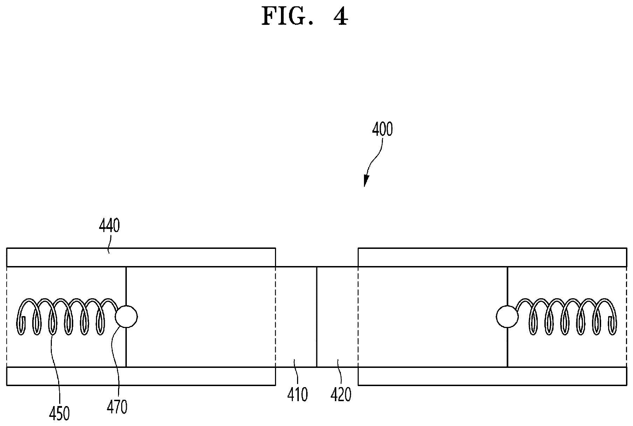

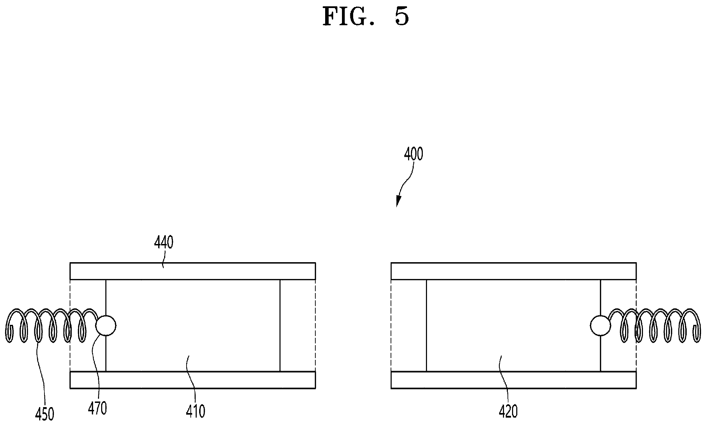

FIGS. 4 and 5 are bottom views schematically showing a portion EA in FIG. 1, according to one or more embodiments of the present disclosure.

FIG. 4 shows a state in which a current path of a bus bar 400 is connected, and FIG. 5 shows a state in which a current path of the bus bar 400 is disconnected.

Referring to FIGS. 4 and 5, the bus bar 400 may include a pair of magnets 410 and 420 that are arranged to stick to each other via an attractive force, elastic members 450 respectively connected to the pair of magnets 410 and 420 and applying a tensile force to the pair of magnets in a direction opposite to the direction in which the attractive force applies, and conductive guide units 440 which respectively guide the movements of the pair of magnets.

The pair of magnets 410 and 420 have opposite polarities on bonding surfaces and may be attached to each other by the attractive force. A conductive layer may be formed on a surface of each of the pair of magnets 410 and 420, and in cases in which (*e.g.*, when) the pair of magnets 410 and 420 are attached to each other, a current path may be formed.

The pair of magnets 410 and 420 may include a material having a low Curie temperature. For example, the pair of magnets 410 and 420 may include, but are not limited to, neodymium magnets. Also, the pair of magnets 410 and 420 may have different materials.

In addition, a magnet may be magnetic because electrons in the atoms of the magnet are aligned in a certain direction. When the temperature of the magnet rises, the thermal movement of atoms and electrons becomes active (increases), and the alignment of the electrons, which contributes to the magnetism of the magnet, may start to break. When the temperature approaches the Curie temperature of the magnet, the magnetic order in the magnet may gradually collapse. When the temperature reaches the Curie temperature of the magnet, the magnet loses its magnetism and may convert from a ferromagnetic substance to a paramagnetic substance.

The Curie temperature of the magnet may be lower than a temperature during the thermal runaway of the battery cell. For example, the Curie temperature of a magnet may be in a range of 60°C to 300°C. The pair of magnets 410 and 420 may lose their magnetism and disconnect the current path due to high heat if (e.g., when) an event such as a short-circuit, thermal runaway, an overcurrent, and heat generation due to resistance, and/or the like, occurs, and thus, the stability of the battery module may be improved. As such, because the Curie temperature of the magnets 410 and 420 may be less that the temperature of a thermal event, such as a thermal runaway, short-circuit, and/or the like, of the battery cell 10, the magnets 410 and 420 of the bus bas 400 may disconnect during such a thermal event, halting or reducing the likelihood of the thermal event transferring to adjacent battery cells, and thus improving the overall stability of the battery module 100.

In one or more embodiments, the bus bar 400 may further include the elastic members 450 that respectively apply the tensile force to the pair of magnets 410 and 420 in a direction opposite to the direction of the attractive force between the pair of magnets 410 and 420.

One end of the elastic member 450 may be coupled to a fixing portion 470 located on each of the pair of magnets 410 and 420, and the other end of the elastic member 450 may be fixed to another fixing portion that is located on the battery cell.

Here, a sensitivity such as a separation point according to temperature, a separation distance, and/or the like may be conveniently adjusted by adjusting the elastic coefficient of the elastic member 450 and the Curie temperature of the pair of magnets 410 and 420.

For example, at the temperature lower than or equal to the Curie temperature, as shown in FIG. 4, the attractive force between the pair of magnets 410 and 420 is set to be greater than the tensile force of the elastic member 450, and the pair of magnets 410 and 420 are attached to each other and the current path may be connected.

In contrast, if (*e.g*., when) the temperature of the battery cell rises up to the Curie temperature of any one of the pair of magnets 410 and 420, at least one of the pair of magnets 410 and 420 has a weakened magnetism, and the attractive force between the magnets may be less than the tensile force applied by the elastic member 450, and accordingly, the pair of magnets 410 and 420 may be isolated from each other (*e.g*., may be separated) . In such instances, the current path may be disconnected.

Joule heat generated by the current may be defined as a product of the square of current intensity and the resistance. Therefore, if (*e.g*., when) the current path of the bus bar 400 is disconnected, the thermal runaway caused by the additional heat generated according to the Joule heat generated from the current may be prevented or reduced and the stability of the battery may be improved.

In one or more embodiments, in instances where the pair of magnets 410 and 420 are separated from each other, a short-circuit may still occur between the pair of magnets 410 and 420 due to moisture, foreign substances, dust, and/or the like, or an induced current may occur between the pair of magnets 410 and 420. In order to address this, a minimum separation distance may be secured so that the pair of magnets 410 and 420 are separated from each other.

The minimum separation distance between the pair of magnets 410 and 420 may be set to comply with applied pressure-resistant and insulating distance standards (*e.g*., EN61558, IPC-2221, IPC-9592B, UL-61010-1).
In one or more embodiments, the separation distance may vary depending on the applied voltage of an application (and/or device in which the battery cell is used). For example, if (*e.g*., when) the applied voltage is small in magnitude, the separation distance may be decreased, and if (*e.g*., when) the applied voltage is large in magnitude, the separation distance may be increased. For example, the separation distance between the pair of magnets 410 and 420 in the battery cell used in an electric vehicle (in which the applied voltage may have a relatively large magnitude) may differ from the separation between the pair of magnets 410 and 420 of the battery cell used in a mobile device(in which the applied voltage may have a relatively small magnitude).
In one or more embodiments, the separation distance between the pair of magnets 410 and 420 may be in a range of 1 mm to 100 mm. In one or more embodiments, the separation distance between the pair of magnets 410 and 420 may be in a range of 5 mm to 50 mm or 10 mm to 20 mm.

In one or more embodiments, the conductive guide units 440 may guide the movement of the pair of magnets 410 and 420.

The conductive guide units 440 are respectively coupled to the pair of magnets 410 and 420 and prevent or reduce the likelihood of the pair of magnets 410 and 420 dropping (*e.g*., dropping or falling out of alignment). The conductive guide units 440 may be around (*e.g*., surround) the pair of magnets 410 and 420. The conductive guide unit 440 may have one or more suitable shapes, *e.g*., a rectangular parallelepiped shape, a cylindrical shape, and/or the like, according to the shapes of the pair of magnets 410 and 420.

Also, the conductive guide unit 440 may be a passage for the current if (*e.g*., when) the current flows through the bus bar 400. To this end, the conductive guide unit 440 may include at least one of nickel, silver, aluminum, copper, and/or gold, but the present disclosure is not limited thereto.

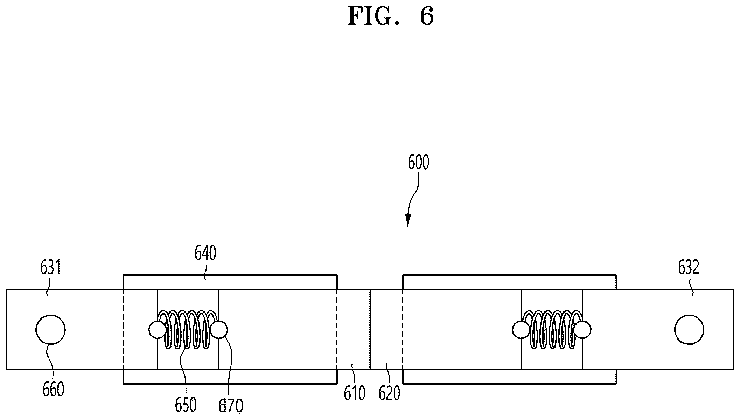

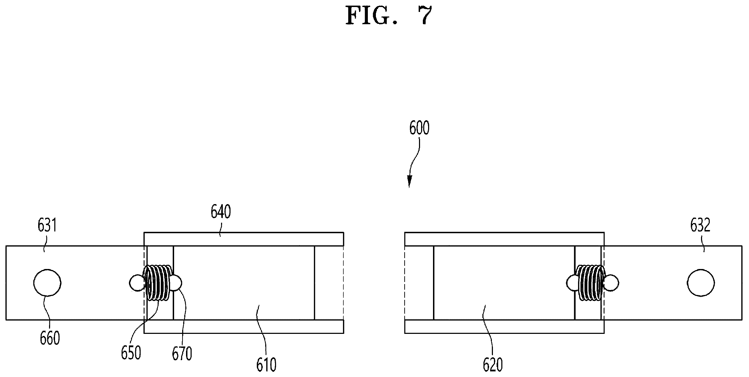

FIGS. 6 and 7 are bottom views schematically showing a portion EA in FIG. 1, according to one or more embodiments of the present disclosure.

FIG. 6 shows a state in which a current path of a bus bar 600 is connected, and FIG. 7 shows a state in which a current path of the bus bar 600 is disconnected.

Referring to FIGS. 6 and 7, the bus bar 600 may include a pair of magnets 610 and 620, conductive guide units 640, elastic members 650, fastening portions 660, fixing portions 670, and second magnets 631 and 632 that are arranged at outer sides of the pair of magnets 610 and 620 so that repulsive force may be applied respectively to the pair of magnets 610 and 620.

The pair of magnets 610 and 620, the conductive guide units 640, the elastic members 650, and the fixing portions 670 may each independently be the same as the pair of magnets 410 and 420, the conductive guide units 440, the elastic members 450, and the fixing portions 470 described above with reference to FIGS. 4 and 5, respectively,, and thus, descriptions thereof may not be repeated.

Polarities of the second magnets 631 and 632 may be magnetized so that surfaces of the second magnets 631 and 632 adjacent to the pair of magnets 610 and 620 may have the same polarities as the surfaces of the magnets 610 and 620 adjacent to the of the second magnets 631 and 632, and thus the repulsive force may be applied to the pair of magnets 610 and 620 by the second magnets 631 and 632.

Because the second magnets 631 and 632 for applying a repulsive force to the pair of magnets 610 and 620 are further provided, the pair of magnets 610 and 620 may be firmly attached to each other at a temperature that is less than or equal to the Curie temperature.

In one or more embodiments, the elastic members 650 may be fixed by the fixing portions 670 that are respectively located on the pair of magnets 610 and 620 and on the second magnets 631 and 632, and may apply the tensile force to the pair of magnets 610 and 620 and to the second magnets 631 and 632.

For example, at the temperature less than or equal to the Curie temperature, the sum of the attractive force applied to the pair of magnets 610 and 620 and the repulsive force applied by the second magnets 631 and 632 to the pair of magnets 610 and 620 may be greater than the tensile force of the elastic members 650. Therefore, the current path may be connected.

While the temperature of the battery cell increases, if (*e.g*., when) the temperature approaches the Curie temperature of at least one of the pair of magnets 610 and 620 and the second magnets 631 and 632, at least one of the pair of magnets 610 and 620 and the second magnets 631 and 632 has a weakened magnetism, and the sum of the attractive force and the repulsive force between the magnets can become less than the tensile force applied by the elastic member 650, and accordingly, the pair of magnets 610 and 620 may be separated from each other and the current path may be disconnected.

Also, if (*e.g*., when) the bus bar 600 includes the pair of magnets 610 and 620 and the second magnets 631 and 632, the sensitivity according to the temperature may be finely adjusted provided that magnets having different Curie temperatures are selected.

For example, in the case where the Curie temperatures of the pair of magnets 610 and 620 and the second magnets 631 and 632 are all the same, that is, (T₁), if (*e.g*., when) the temperature (Tₓ) increases and approaches the Curie temperature (T₁), the pair of magnets 610 and 620 and the second magnets 631 and 632 may lose their magnetism and the magnetic force may be weakened. Therefore, the sum of the attractive force and the repulsive force between the pair of magnets 610 and 620 and the second magnets 631 and 632 is less than the tensile force applied by the elastic member 650 to the pair of magnets 610 and 620 and the second magnets 631 and 632, and thus, the pair of magnets 610 and 620 may be separated from each other and the current path may be disconnected.

In contrast, if (*e.g*., when) one of the pair of magnets 610 and 620 and the second magnets 631 and 632 has a Curie temperature (T₂) that is higher and remaining three magnets have the same Curie temperature (T₁), at the temperature (Tₓ) that is the same as the temperature (Tₓ) at which the pair of magnets 610 and 620 are separated from each other, even though three magnets have weakened magnetism, one remaining magnet has higher Curie temperature and has the magnetism that is not as weakened as in the three magnets. Thus, the sum of the attractive force and the repulsive force between the pair of magnets 610 and 620 and the second magnets 631 and 632 may be greater than the tensile force applied by the elastic member 650. Therefore, at the temperature Tₓ that is the same as the temperature at which the pair of magnets 610 and 620 are separated from each other, the current path may be connected. In such embodiments, the temperature has to increase higher in order for the sum of the attractive force and the repulsive force between the pair of magnets 610 and 620 and the second magnets 631 and 632 to be less than the tensile force applied by the elastic member 650, and then the pair of magnets 610 and 620 may be separated from each other and the current path may be disconnected.

Joule heat generated by the current may be defined as a product of the square of current intensity and the resistance. Therefore, if (*e.g.*, when) the current path of the bus bar 600 is disconnected, the thermal runaway caused by the additional heat generated according to the Joule heat generated from the current may be prevented or reduced and advantageously the stability of the battery may be improved.

Therefore, the sensitivity, such as a separation point in time according to the temperature, the separation distance, and/or the like may be conveniently adjusted by adjusting the elastic coefficient of the elastic member 650 and the Curie temperatures of the pair of magnets 610 and 620 and the second magnets 631 and 632.

The conductive guide units 640 are respectively fastened with the pair of magnets 610 and 620 and the second magnets 631 and 632 so as to prevent or reduce the likelihood of the pair of magnets 610 and 620 and the second magnets 631 and 632 dropping (*e.g*., dropping and/or falling out of alignment due to gravity). Also, if (*e.g*., when) the current flows through the bus bar 600, the conductive guide units may be the passage for the current.

In one or more embodiments, the second magnets 631 and 632 may each include the fastening portion 660. The fastening portions 660 are respectively connected to terminal portions of adjacent battery cells, and the current may flow through the bus bar 600 after passing through the fastening portion 660.

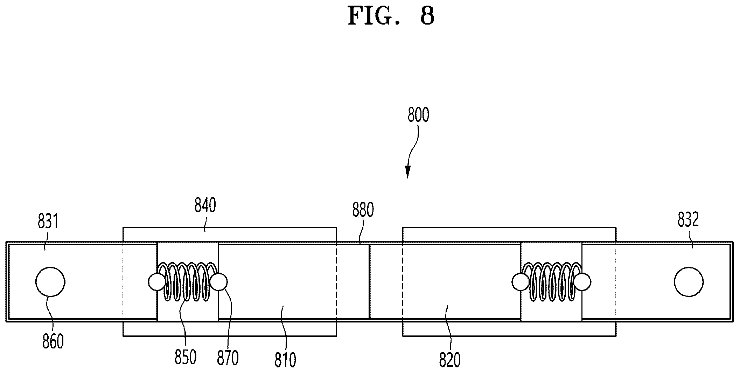

FIG. 8 is a bottom view schematically showing a portion EA of FIG. 1, according to one or more embodiments of the present disclosure.

Referring to FIG. 8, a bus bar 800 may include a pair of magnets 810 and 820, conductive guide units 840, elastic members 850, fastening portions 860, fixing portions 870, second magnets 831 and 832, and metal layers 880.

The pair of magnets 810 and 820, the conductive guide units 840, the elastic members 850, the fastening portions 860, the fixing portions 870, and the second magnets 831 and 832 may each independently be the same as the pair of magnets 610 and 620, the conductive guide units 640, the elastic members 650, the fastening portions 660, the fixing portions 670, and the second magnets 631 and 632 described above with reference to FIGS. 6 and 7, respectively, and detailed descriptions thereof may not be repeated.

The pair of magnets 810 and 820 and the second magnets 831 and 832 may each further include the metal layer 880. The metal layer 880 may be coated on the surfaces of the pair of magnets 810 and 820 and the second magnets 831 and 832.

In embodiments in which the pair of magnets 810 and 820 and the second magnets 831 and 832 each include the metal layer 880, the electric conductivity of the bus bar 800 may be improved, and oxidation of the pair of magnets 810 and 820 and the second magnets 831 and 832 may be prevented or reduced.
The metal layer 880 may include a material having an excellent or suitable electric conductivity, *e.g.*, at least one of nickel, silver, aluminum, copper, or gold, but the present disclosure is not limited thereto.
In one or more embodiments, if (*e.g*., when) the metal layer 880 and the conductive guide unit 840 may include different materials, galvanic corrosion may occur and there may be a difference in conductivities. To address this, the metal layer 880 and the conductive guide unit 840 may include the same material.
The above metal layer 880 may have a thickness in a range of 0.01 mm to 50 mm. When the thickness of the metal layer 880 is less than 0.01 mm, the conductivity improvement due to the metal layer 880 may be low (*e.g*., may rarely occur), and if (*e.g*., when) the thickness of the metal layer 880 exceeds 50 mm, the size of the bus bar 800 is excessively (or substantially) large and manufacturing efficiency of the bus bar 800 may decrease. In one or more embodiments, the thickness of the metal layer 880 may be in a range of 0.05 mm to 10 mm, or 0.1 mm to 4 mm.

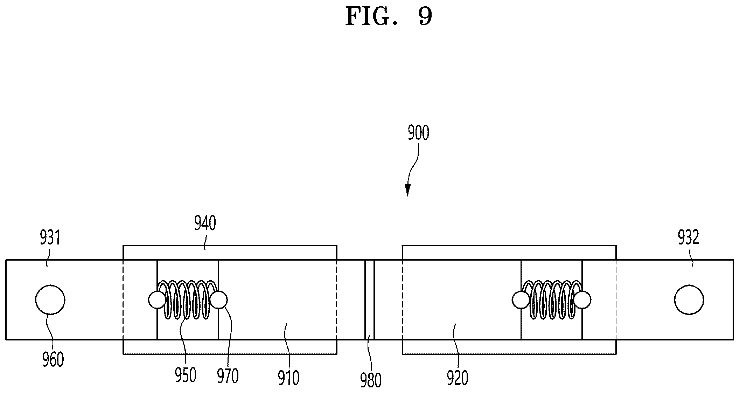

FIG. 9 is a bottom view schematically showing a portion EA of FIG. 1, according to one or more embodiments of the present disclosure.

Referring to FIG. 9, a bus bar 900 may include a pair of magnets 910 and 920, conductive guide units 940, elastic members 950, fastening portions 960, fixing portions 970, second magnets 931 and 932, and a conductive paste layer 980.

The pair of magnets 910 and 920, the conductive guide units 940, the elastic members 950, the fastening portions 960, the fixing portions 970, and the second magnets 931 and 932 may each independently be the same as the pair of magnets 610 and 620, the conductive guide units 640, the elastic members 650, the fastening portions 660, the fixing portions 670, and the second magnets 631 and 632 described above with reference to FIGS. 6 and 7, and detailed descriptions thereof may not be repeated.

The conductive paste layer 980 may be formed on contact portions between the pair of magnets 910 and 920. The conductive paste layer 980 may be formed by applying a conductive paste to the contact surfaces of the pair of magnets 910 and 920. The conductive paste layer 980 reduces pores in the contact surfaces between the pair of magnets 910 and 920 so as to advantageously reduce the contact resistance.

The conductive paste layer 980 may include, but the present disclosure is not limited thereto, at least one of metal particles, carbon nanotubes, carbon black, and/or a conductive resin having excellent or suitable electric conductivity.

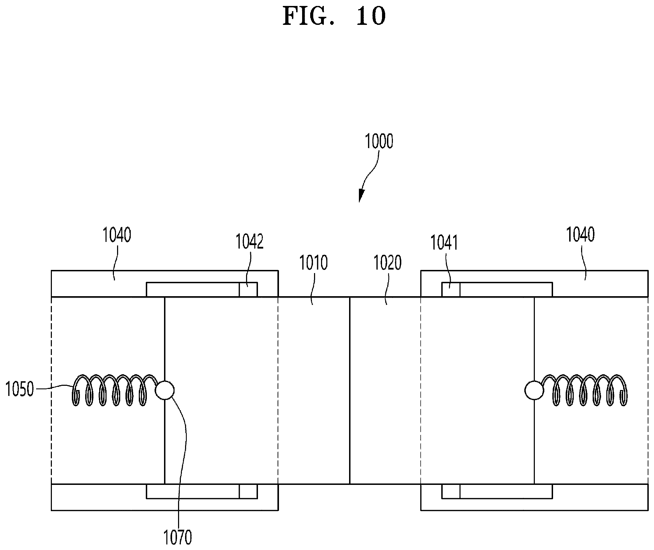

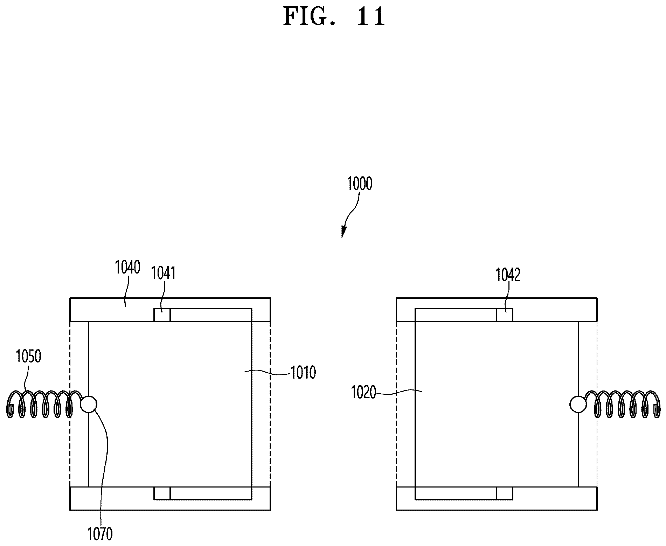

FIGS. 10 and 11 are bottom views schematically showing a portion EA of FIG. 1, according to one or more embodiments of the present disclosure.

Referring to FIGS. 10 and 11, a bus bar 1000 may include a pair of magnets 1010 and 1020, conductive guide units 1040, elastic members 1050, and fixing portions 1070. The conductive guide unit 1040 includes a first fastening portion 1041 that extends in the lengthwise direction of the conductive guide unit 1040 on the inner surface, and the pair of magnets 1010 and 1020 may each include a second fastening portion 1042 on the side surface coupling each of the pair of magnets 1010 and 1020 to the first fastening portion 1041.

The pair of magnets 1010 and 1020, the conductive guide units 1040, the elastic members 1050, and the fixing portions 1070 may each independently be the same as the pair of magnets 410 and 420, the conductive guide units 440, the elastic members 450, and the fixing portions 470 described above with reference to FIGS. 4 and 5, and thus, descriptions thereof may not be repeated.

The first fastening portion 1041 of the conductive guide unit 1040 may have a groove or rail shape, and the second fastening portion 1042 on the magnets 1010 and 1020 may have a rail or groove shape to correspond to the shape of the first fastening portion 1041. The shape of the groove may vary, *e.g*., a circular shape, an elliptical shape, a rectangular shape, and/or the like, but the present disclosure is not limited thereto.

The first fastening portion 1041 and the second fastening portion 1042 may be coupled to each other and may guide the direction of movement of the pair of magnets 1010 and 1020 if (*e.g.*, when) the pair of magnets 1010 and 1020 are moved.

As described above, if (*e.g.*, when) the conductive guide unit 1040 and the pair of magnets 1010 and 1020 include the first fastening portion 1041 and the second fastening portion 1042, even though the temperature of the battery cell rises around the Curie temperature and the pair of magnets 1010 and 1020 have weakened magnetism and are separated from each other, the risk of the one or more of the pair of magnets 1010 and 1020 dropping (*e.g.*, dropping or falling out of alignment) may be effectively prevented or reduced.

According to one or more embodiments of the present disclosure, if (*e.g*., when) the temperature of the battery module increases to a certain temperature or higher (*e.g*., up to or above a preset Curie temperature of magnets used in the bus bar), the current path may be automatically disconnected and thus, the stability of the battery module may be improved.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The portable device, vehicle, and/or the battery, *e.g*., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

The present disclosure has been described in detail. However, it should be understood that the detailed description and specific examples, while indicating preferred embodiments of the disclosure, are given by way of illustration only, since various changes and modifications within the scope of the disclosure will become apparent to one of ordinary skill in the art from this detailed description.

## Claims

1. A battery module (100) comprising:
a plurality of unit battery cells (10, 10a, 10b); and
bus bars (600, 800, 900, 1000) electrically connecting the plurality of unit battery cells (10, 10a, 10b) to each other,
wherein each of the bus bars (600, 800, 900, 1000) comprises:
a pair of magnets (410, 420, 610, 620, 810, 820, 910, 920, 1010, 1020), each magnet (410, 420, 610, 620, 810, 820, 910, 920, 1010, 1020) comprising an end portion and an opposite end portion at an opposite end relative to the end portion, the end portions of the pair of magnets (410, 420, 610, 620, 810, 820, 910, 920, 1010, 1020) having different polarities and being in contact with each other;
an elastic member (450, 650, 850, 950, 1050) connected to each of the opposite end portions of the pair of magnets (410, 420, 610, 620, 810, 820, 910, 920, 1010, 1020); and
a conductive guide unit (440, 640, 840, 940, 1040) guiding a movement of each of the pair of magnets (410, 420, 610, 620, 810, 820, 910, 920, 1010, 1020).

2. The battery module (100) of claim 1, wherein a metal layer (880) is coated on a surface of each of the pair of magnets (410, 420, 610, 620, 810, 820, 910, 920, 1010, 1020).

3. The battery module (100) of claim 1 or 2, further comprising a second magnet (631, 632, 831, 832, 931, 932) adjacent to each of the opposite end portions of the pair of magnets (410, 420, 610, 620, 810, 820, 910, 920, 1010, 1020) and exerting a repulsive force to each of the pair of magnets (410, 420, 610, 620, 810, 820, 910, 920, 1010, 1020).

4. The battery module (100) of claims 1 to 3, wherein the pair of magnets (410, 420, 610, 620, 810, 820, 910, 920, 1010, 1020) each have a Curie temperature at or above which the pair of magnets (410, 420, 610, 620, 810, 820, 910, 920, 1010, 1020) are separated from each other to block a current.

5. The battery module (100) of claims 1 to 4, wherein, at or above the Curie temperatures of the pair of magnets (410, 420, 610, 620, 810, 820, 910, 920, 1010, 1020), a separation distance between the pair of magnets (410, 420, 610, 620, 810, 820, 910, 920, 1010, 1020) is in a range of 1 mm to 100 mm.

6. The battery module (100) of claims 2 to 5, wherein the metal layer (880) comprises at least one of nickel, silver, aluminum, copper, or gold.

7. The battery module (100) of claims 2 to 6, wherein the metal layer (880) and the conductive guide unit (440, 640, 840, 940, 1040) comprise the same material.

8. The battery module (100) of claims 2 to 7, wherein the metal layer (880) has a thickness in a range of 0.01 mm to 50 mm.

9. The battery module (100) of claims 1 to 8, further comprising a conductive paste layer (980) on contact surfaces between the pair of magnets (410, 420, 610, 620, 810, 820, 910, 920, 1010, 1020).

10. The battery module (100) of claims 1 to 9, wherein
the conductive guide unit (440, 640, 840, 940, 1040) comprises a first fastening portion (1041) on an inner surface of the conductive guide unit (440, 640, 840, 940, 1040), the first fastening portion (1041) extending in a lengthwise direction of the conductive guide unit (440, 640, 840, 940, 1040), and
each of the pair of magnets (410, 420, 610, 620, 810, 820, 910, 920, 1010, 1020) comprises a second fastening portion (1042) on a side surface of each of the pair of magnets (410, 420, 610, 620, 810, 820, 910, 920, 1010, 1020), the second fastening portion (1042) coupled to the first fastening portion (1041).

11. A battery module (100) comprising:
at least two unit battery cells (10, 10a, 10b) adjacent to each other; and
a bus bar (600, 800, 900, 1000) electrically connecting the two adjacent unit battery cells (10, 10a, 10b) to each other,
wherein the bus bar (600, 800, 900, 1000) comprises:
a pair of magnets (410, 420, 610, 620, 810, 820, 910, 920, 1010, 1020) attached to each other due to an attractive force;
an elastic member (450, 650, 850, 950, 1050) connected to each of the pair of magnets (410, 420, 610, 620, 810, 820, 910, 920, 1010, 1020) and applying a tensile force to each of the pair of magnets (410, 420, 610, 620, 810, 820, 910, 920, 1010, 1020) in a direction opposite to the direction of the attractive force; and
a metal layer (880) coated on a surface of each of the pair of magnets (410, 420, 610, 620, 810, 820, 910, 920, 1010, 1020).

12. The battery module (100) of claim 11, further comprising a second magnet (631, 632, 831, 832, 931, 932) on an outer side of each of the pair of magnets (410, 420, 610, 620, 810, 820, 910, 920, 1010, 1020) and exerting a repulsive force to each of the pair of magnets (410, 420, 610, 620, 810, 820, 910, 920, 1010, 1020).

13. The battery module (100) of claim 11 or 12, wherein the pair of magnets (410, 420, 610, 620, 810, 820, 910, 920, 1010, 1020) each have a Curie temperature at or above which the pair of magnets (410, 420, 610, 620, 810, 820, 910, 920, 1010, 1020) are separated from each other to block a current.

14. The battery module (100) of claims 11 to 13, wherein, at or above the Curie temperatures of the pair of magnets (410, 420, 610, 620, 810, 820, 910, 920, 1010, 1020), a separation distance between the pair of magnets (410, 420, 610, 620, 810, 820, 910, 920, 1010, 1020) is in a range of 1 mm to 100 mm.

15. The battery module (100) of claims 11 to 14, wherein the metal layer (880) comprises at least one of nickel, silver, aluminum, copper, or gold.
